**Europäisches Patentamt**

**European Patent Office**

**Office européen des brevets**

(11) Numéro de publication: **0 140 750**
**B1**

(12) **FASCICULE DE BREVET EUROPEEN**

(45) Date de publication du fascicule du brevet: **06.04.88**

(21) Numéro de dépôt: **84401878.8**

(22) Date de dépôt: **21.09.84**

(51) Int. Cl.⁴: **A 22 B 3/06**

(54) **Dispositif pour assommer par décharge électrique des animaux destinés à l'abattage.**

(30) Priorité: **29.09.83 FR 8315481**
**10.08.84 FR 8412699**

(43) Date de publication de la demande:
**08.05.85 Bulletin 85/19**

(45) Mention de la délivrance du brevet:
**06.04.88 Bulletin 88/14**

(84) Etats contractants désignés:
**AT BE CH DE GB IT LI LU NL SE**

(56) Documents cités:
**EP-A-0 019 332**
**EP-A-0 067 482**

(73) Titulaire: **Grajoszex, Jean**
**Le Moulin Foulon**
**F-61120 Crouttes (FR)**

(72) Inventeur: **Grajoszex, Jean**
**Le Moulin Foulon**
**F-61120 Crouttes (FR)**

(74) Mandataire: **Bonnetat, Christian et al**
**Cabinet PROPI Conseils 23 rue de Léningrad**
**F-75008 Paris (FR)**

Courier Press, Leamington Spa, England.

## Description

La présente invention concerne un dispositif pour assommer par décharge électrique des animaux destinés à l'abattage.

On connait déjà de tels dispositifs du type comportant d'une part des moyens d'acheminement des animaux constitués de deux tapis sans fin se faisant face et inclinés de façon à former un passage en forme de V, et d'autre part deux électrodes effaçables mobiles entre une première position active pour laquelle elles sont placées de part et d'autre de la tête de l'animal et une seconde position effacée permettant le dégagement de l'animal assommé.

Dans de tels dispositifs, lorsque l'on veut éviter une application manuelle des électrodes, coûteuse en main d'oeuvre et non exempte de danger, les électrodes sont montées sur une équipage entrainé à l'aide d'organes moteurs entre les deux positions extrêmes, comme dans la demande de brevet européen No. 019 332.

Cette dernière disposition conduit à des constructions lourdes, onéreuses et complexes. Ces systèmes n'assurent pas le synchronisme rigoureux (qui est nécessaire) entre l'avancement de l'animal (sur les tapis d'entrainement) et le chariot porte-électrode.

La demande de brevet européen No. 067 482 prévoit la suspension des électrodes à un système pendulaire, lequel cependant suit un parcours courbe donc non parallèle au parcours linéaire de la tête de l'animal.

La présente invention concerne un dispositif pour assommer par l'électricité les animaux de boucherie de construction simple et de fonctionnement fiable et sûr et qui assure un parcours à la fois rigoureusement synchrone et rigoureusement parallèle entre les électrodes et la tête de l'animal pendant leur temps de contact nécessaire pour assurer l'électrocution de l'animal.

A cet effet l'invention concerne un dispositif pour assommer par décharge électrique des animaux de boucherie en cours d'abattage, du type comportant des moyens d'acheminement desdits animaux et au moins deux électrodes montées sur un chariot support, lequel est déplaçable le long d'un chemin de guidage parallèle au moyen d'acheminement des animaux entre une première position active pour laquelle les électrodes sont aptes à prendre place de part et d'autre de la tête de l'animal et une seconde position effacée permettant l'évacuation de l'animal et ce dispositif est caractérisé en ce que le chariot porteur des électrodes est libre de se déplacer le long du chemin de guidage et il est déplaçable le long dudit chemin de guidage depuis sa position active vers sa position effacée sous la seule poussée de l'animal et d'autre part en ce que le chemin de guidage et les moyens d'acheminement des animaux sur la partie parallèle de leur parcours, suivent des directions parallèles inclinées vers le haut dans le sens allant de la position active vers la position effacée, le chariot étant ainsi apte à accompagner le mouvement d'avancement de l'animal en cours d'électrocution et après la chute de l'animal assommé, à redescendre librement par gravité jusqu'à la position de départ A pour desservir l'animal suivant.

Ainsi, le mouvement des électrodes est réalisé automatiquement et sans dépense d'énergie puisque à partir de la première position active, celles-ci sont entraînées par la tête même de l'animal selon un parcours rigoureusement parallèle et synchrone entre les électrodes et la tête sur laquelle elles sont appliquées; après quoi ces électrodes sont ramenées dans la position initiale de départ, par simple gravité.

En outre le chemin de guidage comporte dans le sens d'avancement des animaux, une première partie linéaire parallèle à la direction d'avancement des animaux définie par les moyens d'acheminement et une seconde partie linéaire d'inclinaison plus grande sur l'horizontale par rapport à ces derniers, le point de courbure entre ladite première partie linéaire et la seconde partie étant situé (dans le sens d'avancement des animaux) en amont de la position effacée et an aval de la sortie desdits moyens d'acheminement.

Et, de préférence, les électrodes sont disposées en aval (dans le sens de l'avancement de l'animal) de deux flancs latéraux portés par ledit chariot, les deux flans étant isolés électriquement, et étant convergents vers les électrodes en définissant ensemble un cône de guidage de la tête de l'animal vers un espace libre central dont les bords sont occupés par les deux électrodes.

Ainsi le passage formé entre les deux flancs, définit un volume libre se resserrant de l'arrière vers l'avant et du bas vers le haut.

Plus spécialement chacune des électrodes peut être montée à l'intérieur d'un boîtier en forme de pyramide tétraédrique dont une face avant (dans le sens de l'avancement de l'animal) est constituée par un des flancs latéraux, la pyramide tétraédrique reposant sur sa pointe et étant suspendue au chariot supérieur selon sa base sensiblement triangulaire, la pyramide étant ouverte selon une arête orientée vers le centre du passage de l'animal, cette arête ouverte permettant le libre mouvement de l'électrode correspondante, montée déplaçable à l'intérieur du boîtier formé par la pyramide tétraédrique.

Selon une forme de réalisation de l'invention les électrodes sont pivotantes et elles sont montées solidaires d'un bras de levier orienté latéralement vers l'extérieur du passage central, l'extrémité extérieure du bras de levier étant tourillonnée sur un axe d'articulation permettant le pivotement des électrodes dans un plan transversal à l'axe d'avancement des animaux et leur rappel par gravité vers le bas.

Selon une autre particularité de l'invention les électrodes comportent un bord intérieur concave et ont une forme générale d'arc de cercle, et elles sont supportées par un bras de levier disposé selon un axe radial par rapport à l'arc de cercle constitué par chaque électrode.

Enfin, le dispositif pourra comporter un contacteur sensible au mouvement de pivotement des électrodes de sorte que le mouvement de pivotement vers le haut de chaque électrode (sous la poussée déclenchée par l'animal selon une réaction réflexe) est apte à agir sur ce contacteur apte à déclencher le passage du courant et l'effet de tétanisation de l'animal dont la tête est prisonnière entre les deux électrodes.

L'invention sera bien comprise à la lumière des dessines annexés.

La figure 1 est une vue de côté d'un exemple de réalisation du dispositif selon l'invention dans lequel la direction d'avancement des animaux est inclinée sur l'horizontale.

La figure 2 est une vue en coupe transversale du dispositif de la figure 1.

La figure 3 montre une vue en perspective, d'une variante du dispositif.

La figure 4 montre une vue en coupe transversale du dispositif de la figure 3.

Le dispositif 1 montré sur les figures est du type comportant des moyens d'acheminement 2 constitués de deux tapis sans fin 3 et 4 se faisant face et inclinés de façon à former une passage 5 en forme de V dans lequel les animaux 6 et 7 sont entraînés en translation, en portant par leurs flancs sur les parois en regard des tapis sans fin 3 et 4.

Le dispositif selon l'invention comporte également une paire d'électrodes 8 et 9 effaçables et mobiles.

A cette fin, les électrodes 8 et 9 sont solidaires d'un chariot 10 monté sur des roulements libres latéraux 11 et 12 et déplaçables le long de moyens de guidage constitués de deux rails 13 et 14 parallèles entre eux et aptes à recevoir les organes de roulement.

Le chemin de guidage défini par les rails de guidage 13 et 14 comporte une première partie 15 parallèle à la direction d'avancement des animaux (flèche F) et une seconde partie 16 divergeant vers le haut par rapport à la première partie 15.

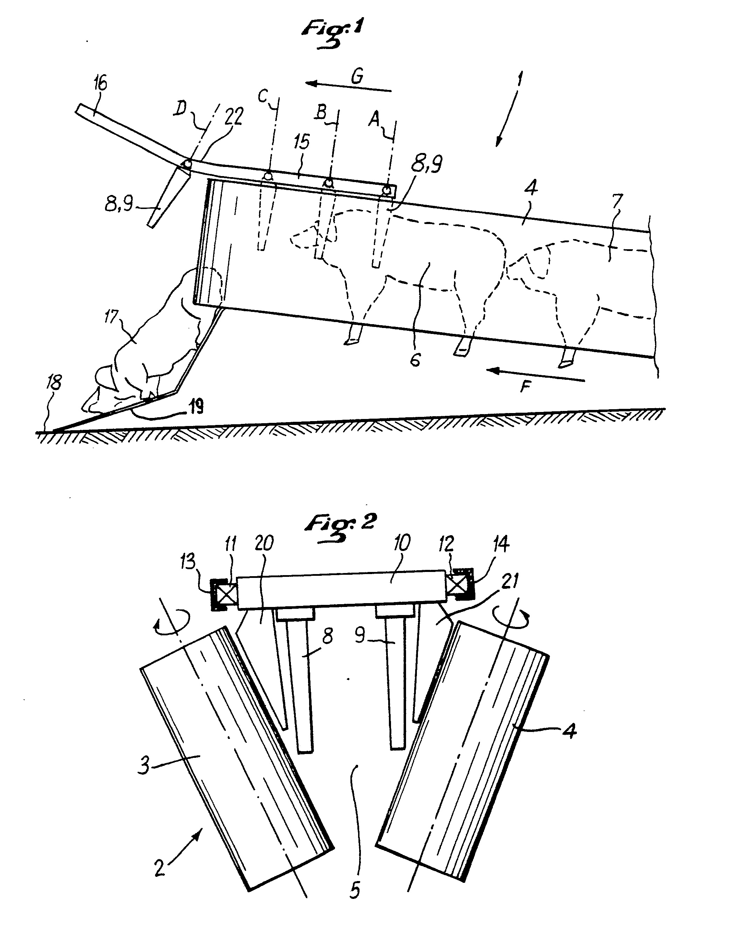

Selon l'exemple de la figure 1, la direction d'avancement des animaux est inclinée par rapport à l'horizontale, il en est de-même en conséquence de la première partie 15 du chemin de guidage du chariot 10 portant les électrodes 8 et 9.

Le chariot 10 est susceptble de se déplacer librement le long des rails de guidage 13 et 14 grâce à ses organes de roulement libre 11 et 12.

Le fonctionnement du dispositif est décrit ci-après.

Les animaux 6 et 7 sont acheminés grâce aux tapis sans fin 3 et 4 dans la direction et le sens indiqués par la flèche F de la figure 1.

Les électrodes 8 et 9 sont disposées dans le passage 5 de manière qu'elles puissent être placées de part et d'autre de la tête de l'animal.

En position de départ, les électrodes sont dans la première position extrême A, c'est-à-dire le plus bas et le plus en arrière de la course possible du chariot 10.

Le premier animal, en l'occurrence des porcs selon l'exemple des figures, arrive et place sa tête entre les électrodes.

L'animal 6 continuant sa course entraîne les électrodes dans son mouvement selon la flèche G de la figure 1, jusqu'à une position intermédiaire B, où des contacteurs ou détecteurs de position ferment le circuit électrique reliant les électrodes à une source de courant électrique (non représentés).

A partir de cet instant, la tête de l'animal reçoit un courant électrique qui la traverse latéralement.

Les tapis d'acheminement 3 et 4 poursuivant leur course, entrainent l'animal et les électrodes toujours disposées de part et d'autre de la tête de l'animal, jusqu'à une autre position intermédiaire C, où des seconds contacteurs ou détecteurs (connus en eux-mêmes) ouvrent le circuit électrique, supprimant ainsi la liaison des électrodes avec la source d'énergie électrique.

Le mouvement d'avancement des animaux se poursuit jusqu'à l'extrêmité des tapis 3 et 4, où l'animal 17, n'étant plus soutenu par ces derniers, tombe sur le sol 18 ou sur un plan incliné ou table de desserte 19. Il est à noter qu'à partir de la position C l'animal est assommé.

Le chariot 10 étant monté libre sur les rails 13 et 14 inclinés sur l'horizontale, est rappelé en sa première position active extrême A par simple gravité. Il roule donc le long des rails 13 et 14 jusqu'à atteindre cette position A, où des organes d'arrêt sont prévus et pour laquelle les électrodes sont prêtes à desservir l'animal suivant.

De manière avantageuse, la seconde position effacée D est placée sur la seconde partie divergente 16 des rails de guidage 13 et 14. Le point de courbure 22 entre la première partie 15 et la seconde partie 16 est donc disposé à proximité et juste en amont (suivant le sens d'avancement des animaux) de la position extrême effacée D.

Ainsi, les électrodes 8 et 9 s'écartent vers l'avant du passage 5, dès que le chariot 10 parvient sur la seconde partie divergente 16 des rails de guidage, ainsi que montré par la position extrême effacée D de la figure 1.

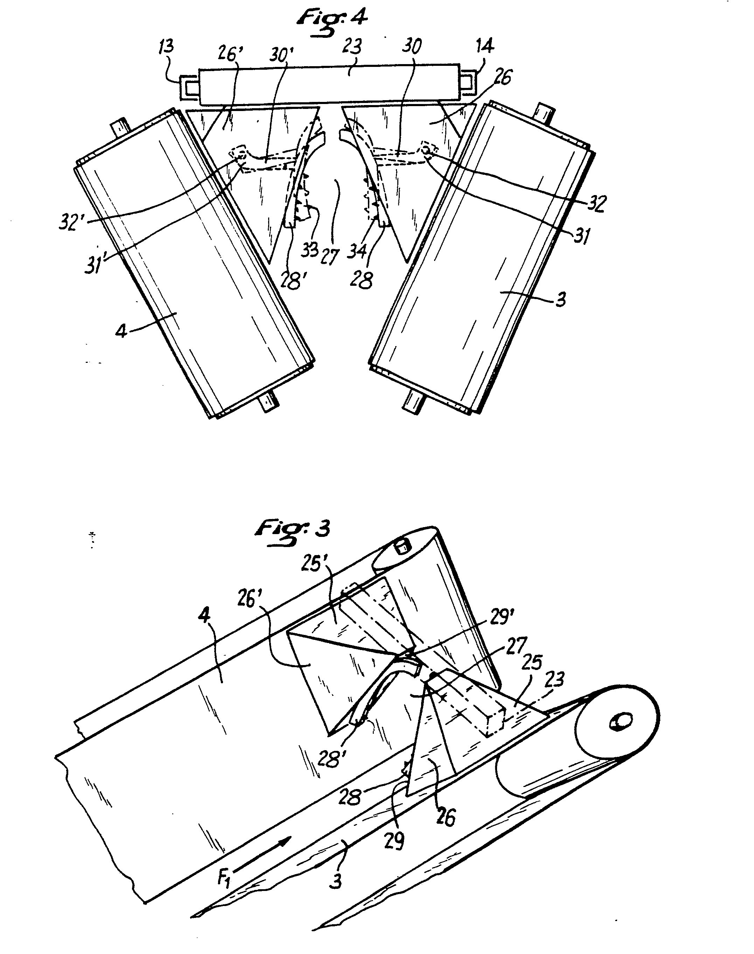

Selon les figures 3 et 4, le chariot 23 (schématisé sur la figure 1) supporte l'ensemble porte-électrodes constitué notamment des deux boîtiers 25 et 25' en forme de pyramide tétraédrique. Cette pyramide comporte notamment vers l'aval, c'est-à-dire dans le sens de l'avancement de l'animal symbolisé par la flèche F1, un flanc 36 et 26', les deux flancs 26 et 26' constituant entre eux un cône de guidage vers l'espace central 27.

Chaque boîtier tétraédrique 25 et 25' constitue ainsi un carter de protection isolé électriquement et à l'intérieur duquel peut se positionner une des deux électrodes 28 et 28' débordant vers l'espace central 27 à traverse l'arête ouverte 29, 29'.

Comme vu sur la figure 4 les électrodes 28 et 28' débordent légèrement par rapport à l'arête 29 et 29' de sorte que automatiquement la tête de l'animal viendra se positionner entre les deux électrodes 28 et 28'.

On comprend en effet que l'animal avançant, étant entraîné par les convoyeurs 3 et 4 dans le sens de la flèche F1, va recontrer le cône de guidage constitué par les deux flancs latéraux 26 et 26'.

Ces deux flancs sont orientés de façon à conformer un volume divergeant vers le bas et vers l'arrière' ou en d'autres termes convergeant vers l'avant et vers le haut.

Ainsi la tête de l'animal est obligatoirement guidée vers le passage central 27.

L'animal vient donc insérer sa tête obligatoirement entre les deux électrodes 28 et 28'.

On rappellera qu'à cette phase le chariot porte-électrodes 23 qui est ramené dans sa position de départ par simple gravité est immobile et en position d'attente; il est libre de ses mouvement, étant guidé simplement à roulement libre sur les rails 13 et 14.

L'animal rencontrant cette gêne que représente l'insertion de la tête à l'intérieur du passage 27 défini par les deux électrodes 28 et 28' cherche alors à se dégager en se débattant et notamment par un relèvement de la tête vers le haut.

Dans ce mouvement les électrodes vont suivre la tête de l'animal.

En effet les électrodes 28 et 28' sont montées chacune sur un bras de levier 30 et 30'.

Les bras de levier 30 et 30' porteurs des électrodes sont montés pivotantes à l'extrêmité d'un coude 31, 31' sur un axe de tourillonnement 32, 32'.

Les électrodes sont maintenues en position basse telle que représentée en trait plein sur la figure 2 par une butée d'appui définissant leur position inférieure de repos.

Les électrodes sont libres dans leur mouvement de pivotement vers le haut étant entraînées par la tête de l'animal pour venir occuper alors une position telle que représentée en traits pointillés sur la figure 4.

Dans la position telle que représentée en pointillés les électrodes assurent notamment par les picots internes 33 et 34 le contact intime et notamment électrique qvec la tête de l'animal.

Dans ce mouvement, l'ensemble porte-électrodes suspendu au chariot 3 accompagne automatiquement et librement le corps de l'animal emprisonné par les courroies latérales 1 et 1'.

Lorsque l'animal subit l'effet de la décharge électrique, son corps s'affaisse, arrivant l'ailleurs à ce moment à l'extrémité du parcours guidé par les courroies 3 et 4 et le corps peut donc tomber par gravité pour être repris en vue des traitements et procèdures ultérieurs.

Mais on comprend que, dès que l'animal étant anesthésié aura perdu ses rélexes, sa tête retombe et se trouve ainsi libérée automatiquement de la pression des électrodes.

On obtient ainsi un système entièrement automatique qui permet de doser le temps de passage du courant en fonction du temps de réponse de chaque sujet; c'est le sujet lui-même qui vient ainsi se positionner dans la position optimum de réception du courant et qui déclenche par là même l'action de tétanisation; et dès que cette action a produit son effet, ce qui se traduit par un relâchement des réflexes et un affaissement du corps, l'ensemble, par suite de la chute de la tête, puis du corps de l'animal, est ainsi amené en position de dégagement, permettant le retour des électrodes pivotant vers leur position initiale avec le fin du passage du courant.

Le système selon l'invention est donc ainsi parfaitement automatisé, tout en assurant de parfaites conditions de sécurité pour le personnel de service, libéré pratiquement de toute intervention; on assure un effet de tétanisation optimum de chaque animal, guidé automatiquement vers la position de réception et dont le temps d'électrocution est adapté à sa constitution personnelle et à son temps de réponse.

**Revendications.**

1. Dispositif pour assommer par décharge électrique des animaux de boucherie en cours d'abattage, du type comportant des moyens d'acheminement (3, 4) desdits animaux et au moins deux électrodes (8, 9) montées sur un chariot support (10), lequel est déplaçable le long d'un chemin de guidage (15) parallèle aux moyens d'acheminement (4) des animaux entre une première position active (A) pour laquelle les électrodes sont aptes à prendre place de part et d'autre de la tête de l'animal et une seconde position effacée (D) permettant l'évacuation de l'animal, caractérisé en ce que le chariot (10), porteur des électrodes (8, 9), est libre de se déplacer le long du chemin de guidage (13, 14, 15) et il est déplaçable le long de ce chemin depuis sa position active (A) vers sa position effacée (D) sous la seule poussée de l'animal (6) et d'autre part en ce que le chemin de guidage (13, 14, 15) et les moyens d'acheminement des animaux (3, 4) suivent des directions parallèles (F, G), inclinées vers le haut dans le sens allant de la position active (A) vers la position effacée (D), le chariot étant ainsi apte à accompagner le mouvement d'avancement de l'animal en cours d'électrocution (6) et après la chute de l'animal assommé (17), à redescendre librement par gravité jusqu' à la position de départ (A) pour desservir l'animal suivant (7).

2. Dispositif selon la revendication 1, caractérisé en ce que le chemin de guidage (13, 14, 15) des électrodes (8, 9) comporte dans le sens d'avancement des animaux, une première partie linéaire (15) parallèle à la direction d'avancement des animaux (6, 7) définie par les moyens d'acheminement (3, 4) et une seconde partie linéaire (16) d'inclinaison plus grande sur l'horizontale par rapport à ces derniers, le point de courbure (22) entre ladite première partie linéaire (15) et la seconde partie (16) étant situé (dans le sens d'avancement des animaux) en amont de la position effacée (D) et en aval de la sortie desdits moyens d'acheminement.

3. Dispositif selon l'une des revendications 1 ou 2, caractérisé en ce que les électrodes (28), (28') sont disposées en aval (dans le sens de l'avancement de l'animal) de deux flancs latéraux (26), (26') portés par ledit chariot, les deux flancs étant isolés électriquement, et étant convergents vers les électrodes en définissant ensemble un cône de guidage de la tête de l'animal vers un espace libre central (27) dont les bords sont occupés par les deux électrodes.

4. Dispositif selon la revendication 3, caractérisé en ce que les deux bords des deux flancs (26, 26') définissant entre eux la zone de passage central (27) forment un profil divergent vers le bas.

5. Dispositif selon l'une des revendications 3 ou 4, caractérisé en ce que le passage (27) formé entre les deux flancs (26, 26') de guidage forme un volume libre se resserrant de l'arrière vers l'avant et du bas vers le haut.

6. Dispositif selon l'une des revendications 3, 4 ou 5, caractérisé en ce que chacune des électrodes (28), (28') est montée à l'intérieur d'un boîtier (25), (25') en forme de pyramide tétraédrique dont une face avant (dans le sens de l'avancement de l'animal) est constituée par un des flancs latéraux (26), (26'), la pyramide tétraédrique reposant sur sa pointe et étant suspendue au chariot supérieur (23) selon sa base sensiblement triangulaire, la pyramide étant ouverte selon une arête (29), (29') orientée vers le centre du passage de l'animal, cette arête ouverte permettant le libre mouvement de l'électrode correspondante (28), (28') montée déplaçable à l'intérieur du boîtier formé par la pyramide tétraédrique.

7. Dispositif selon l'une des revendications 1 à 6, caractérisé en ce que les électrodes (28), (28') sont montées pivotantes, étant suspendues sous le chariot, entre une position écartée et une position rapprochée par rapport à la tête de l'animal.

8. Dispositif selon la revendication 7, caractérisé en ce que lesdites électrodes pivotantes sont montées solidaires d'un bras de levier (30), (30') orienté latéralement vers l'extérieur du passage central (27), l'extrémité extérieure du bras de levier étant tourillonnée sur un axe d'articulation (32), (32') permettant le pivotement des électrodes dans un plan transversal à l'axe d'avancement des animaux et leur rappel par gravité vers le bas.

9. Dispositif selon la revendication 7 ou 8, caractérisé en ce que les électrodes (28), (28') comportent un bord intérieur concave et ont une forme générale d'arc de cercle, et elles sont supportées par un bras de levier (30), (30') disposé selon un axe radial par rapport à l'arc de cercle constitué par chaque électrode.

10. Dispositif selon l'une des revendications 8 ou 9, caractérisé en ce que l'extrémité du bras de levier (30), (30') comporte un coude (31), (31') orienté vers le haut et supporté par l'axe de tourillonnement (32), (32') de l'ensemble.

11. Dispositif selon l'une des revendications 7 à 10, caractérisé en ce qu'il comporte un contacteur sensible au mouvement de pivotement des électrodes de sorte que le mouvement de pivotement vers le haut de chaque électrode (sous la poussée déclenchée par l'animal selon une réaction réflexe) est apte à agir sur ce contacteur apte à déclencher le passage du courant et l'effet de tétanisation de l'animal, dont la tête est prisonnière entre les deux électrodes.

**Patentansprüche**

1. Vorrichtung zum Töten durch elektrische Entladung von Schlachttieren während einer Schlachtung mit Mitteln zum Führen (3, 4) der Tiere und mit mindestens zwei auf einem Tragschlitten (10) angebrachten Elektroden (8, 9), wobei der Schlitten längs eines Führungswegs (15) parallel zu den Mitteln zum Führen (4) der Tiere zwischen einer ersten aktiven Position (A), in der die Elektroden in der Lage sind, beiderseits des Kopfes des Tiers enzugreifen, und einer zweiten Position (D), an der das Tier entnommen werden kann, verschiebbar ist, dadurch gekennzeichnet, daß der Schlitten (10), der Träger der Elektroden (8, 9), frei längs des Führungswegs (13, 14, 15) verschiebbar ist und daß er längs dieses wegs von seiner aktiven Position (A) zu seiner Position (D) allein unter der Schubwirkung des Tiers (6) verschiebbar ist, und daß andererseits der Führungsweg (13, 14, 15) und die Mittel zum Führen der Tiere (3, 4) parallelen Richtungen (F, G) folgen, nach oben geneigt von der aktiven Position (A) zur Position (D), wobei der Schlitten somit in der Lage ist, der Vorwärtsbewegung des Tiers beim Töten durch Elektrizität (6) zu folgen und nach Herunterfallen des getöteten Tiers (17) durch Schwerkraft frei zur Ausgangsposition (A) zurückzukehren, um das folgende Tier (7) zu behandeln.

2. Vorrichtung nach Anspruch 1, dadurch gekennzeichnet, daß der Führungsweg (13, 14, 15) der Elektroden (8, 9) in Vorwärtsbewegungsrichtung der Tiere einen ersten linearen Teil (15), parallel zu der durch die Mittel zum Führen (3, 4) definierten Vorwärtsbewegungsrichtung der Tiere (6, 7), und einen zweiten linearen Teil (16) mit größerer Neigung zur Horizontalen als die Mittel zum Führen (3, 4) umfaßt, wobei der Krümmungspunkt (22) zwischen dem ersten linearen Teil (15) und dem zweiten Teil (16) sich in Vorwärtsbewegungsrichtung gesehen oberhalb der Position (D) und unterhalb des Ausgangs der Mittel zum Führen (3, 4) befindet.

3. Vorrichtung nach einem der Ansprüche 1 oder 2, dadurch gekennzeichnet, daß die Elektroden (28), (28') unterhalb (in Vorwärtsbewegungsrichtung des Tiers) von zwei vom Schlitten (10) getragenen Seitenflügeln (26), (26') angeordnet sind, wobei die beiden Flügel elektrisch isoliert sind und auf die Elektroden zu konvergieren, wobei sie zusammen einen Führungskegel für den Kopf des Tiers zu einem zentralen freien Raum (27) hin definieren, dessen Ränder von den beiden Elektroden eingenommen werden.

4. Vorrichtung nach Anspruch 3, dadurch gekennzeichnet, daß die beiden Ränder der beiden Flügel (26, 26'), die zwischen sich die Zone des zentralen Durchgangs definieren, ein nach unten divergierendes Profil bilden.

5. Vorrichtung nach einem der Ansprüche 3 oder 4, dadurch gekennzeichnet, daß der zwischen den beiden Führungsflügeln (26, 26') gebildete Durchgang (27) einen sich von hinten nach vorn und von unten nach oben verjüngenden freien Raum bildet.

6. Vorrichtung nach einem der Ansprüche 3, 4 oder 5, dadurch gekennzeichnet, daß jede der Elektroden (28), (28') in Innern eines Gehäuses (25), (25') in Form einer Tetraeder-Pyramide angebracht ist, wobei eine Vorderseite (in Vorwärtsbewegungsrichtung de Tiers) durch einen der Seitenflügel (26), (26') gebildet wird und wobei die Tetraeder-Pyramide auf ihrer Spitze ruht und am oberen Schlitten (23) an ihrer im wesentlichen dreieckigen Grundfläche aufgehängt ist, wobei die Pyramide nach einer zum Zentrum des Durchgangs für das Tier hin orientierten Kante (29), (29') geöffnet ist, wobei diese offene Kante die freie Bewegung der entsprechenden Elektrode (28), (28') erlaubt, die verschiebbar im Innern des von der Tetraeder-Pyramide gebildeten Gehäuses angebracht ist.

7. Vorrichtung nach einem der Ansprüche 1 bis 6, dadurch gekennzeichnet, daß die Elektroden (28), (28') schwenkbar angeordnet sind, wobei sie unter dem Schlitten aufgehängt sind, zwischen einer entfernten Position und einer angenäherten Position in Bezug auf den Kopf des Tiers.

8. Vorrichtung nach Anspruch 7, dadurch gekennzeichnet, daß die schwenkbaren Elektroden (28), (28') fest verbunden mit einem Hebelarm (30), (30') angebracht sind, der seitlich nach außen zum zentralen Durchgang (27) hin orientiert ist, wobei das äußere Ende des Hebelarms um eine Drehachse (32), (32') gedreht wird, wobei das Schwenken der Elektroden in einer zur Achse der Vorwärtsbewegung der Tiere quer angeordneten Ebene und ihre Rückwärtsbewegung nach unten durch Schwerkraft erlaubt wird.

9. Vorrichtung nach Anspruch 7 oder 8, dadurch gekennzeichnet, daß die Elektroden (28), (28') einen konkaven Innenrand und die allgemeine Form eines Kreisbogens aufweisen, und daß sie von einem in einer radialen Achse bezüglich des von jeder Elektrode gebildeten Kreisbogens angeordneten Hebelarm (30), (30') gehalten werden.

10. Vorrichtung nach einem der Ansprüche 8 oder 9, dadurch gekennzeichnet, daß das Ende des Hebelarms (30), (30') eine nach oben gerichtete Abbiegung (31), (31') umfaßt, die von der Drehachse (32), (32') der Baugruppe gehalten wird.

11. Vorrichtung nach einem der Ansprüche 7 bis 10, dadurch gekennzeichnet, daß sie einen Kontaktgeber umfaßt, der derart die Schwenkbewegung der Elektroden erfaßt, daß die nach oben gerichtete Schwenkbewegung jeder Elektrode (unter der Schubwirkung durch Reflexe des Tiers) auf diesen Kontaktgeber wirken kann, wobei der Stromdurchgang und eine Lähmung des Tiers bewirkt wird, dessen Kopf zwischen den beiden Elektroden gefangen ist.

**Claims**

1. Device for stunning by electrical discharge slaughterhouse animals in the course of slaughtering, of the type comprising means (3, 4) for conveying said animals and at least two electrodes (8, 9) mounted on a support carriage (10), which is displaceable along a guide path (15) parallel to the animal conveying means (4) between a first active position (A) for which the electrodes are adapted to take position on either side of the animal's head and a second retracted position (D) allowing evacuation of the animal, characterized in that the carriage (10), bearing the electrodes (8, 9), is free to move along the guide path (13, 14, 15) and it is displaceable along this path from its active position (A) towards its retracted position (D) solely under the thrust of the animal (6) and, on the other hand, in that the guide path (13, 14, 15) and the animal conveying means (3, 4) follow parallel directions (F, G), inclined upwardly in the direction going from the active position (A) towards the retracted position (D), the carriage thus being adapted to accompany the advance movement of the animal (6) in the course of electrocution and after the fall of the stunned animal (17), to redescend freely by gravity to the starting position (A) to serve the following animal (7).

2. Device according to Claim 1, characterized in that the guide path (13, 14, 15) of the electrodes (8, 9) comprises, in the direction of advance of the animals, a first linear part (15) parallel to the direction of advance of the animals (6, 7) defined by the conveying means (3, 4) and a second linear part (16) of greater inclination with respect to the horizontal compared with the latter, the point of curvature (22) between said first linear part (15) and the second part (16) being located (in the direction of advance of the animals) upstream of the retracted position (D) and downstream of the exit of said conveying means.

3. Device according to one of Claims 1 or 2, characterized in that the electrodes (28), (28') are disposed downstream (in the direction of advance of the animal) of two lateral side elements (26) (26') borne by said carriage, the two side elements being electrically insulated, and being convergent towards the electrodes, defining together a cone for guiding the head of the animal towards a central free space (27) of which the edges are occupied by the two electrodes.

4. Device according to Claim 3, characterized in that the two edges of the two side elements (26, 26') defining therebetween the central passage zone (27) form a downwardly divergent profile.

5. Device according to one of Claims 3 or 4, characterized in that the passage (27) formed between the two guiding side elements (26, 26') forms a free volume narrowing forwardly and upwardly.

6. Device according to one of Claims 3, 4 or 5, characterized in that each of the electrodes (28), (28') is mounted inside a casing (25), (25') in the form of a triangular pyramid of which a front face (in the direction of advance of the animal) is constituted by one of the lateral side elements (26), (26'), the triangular pyramid resting on its apex and being suspended from the upper carriage (23) along its substantially triangular base, the pyramid being open along an edge (29), (29') oriented towards the centre of the passage of the animal, this open edge allowing free movement of the corresponding electrode (28), (28') mounted to move inside the casing formed by the triangular pyramid.

7. Device according to one of Claims 1 to 6, characterized in that the electrodes (28), (28') are mounted to pivot, being suspended beneath the carriage, between a moved apart position and a position brought closer with respect to the animal's head.

8. Device according to Claim 7, characterized in that said pivoting electrodes are mounted fast with a lever arm (30), (30') oriented laterally towards the outside of the central passage (27), the outer end of the lever arm being swivelled on a pivot pin (32), (32') allowing pivoting of the electrodes in a plane transverse to the axis of advance of the animals and their downward return by gravity.

9. Device according to Claim 7 or 8, characterized in that the electrodes (28), (28') comprise a concave inner edge and have the general form of an arc of circle, and they are supported by a lever arm (30), (30') disposed along a radial axis with respect to the arc of circle constituted by each electrode.

10. Device according to one of Claims 8 or 9, characterized in that the end of the lever arm (30), (30') comprises a bend (31), (31') oriented upwardly and supported by a swivel pin (32), (32') of the assembly.

11. Device according to one of Claims 7 to 10, characterized in that it comprises a contactor sensitive to the pivoting movement of the electrodes with the result that the upward pivoting movement of each electrode (under the thrust made by the animal in a reflex reaction) is adapted to act on this contactor adapted to trigger off passage of the current and the effect of tetanization of the animal, whose head is captive between the two electrodes.

0 140 750

Fig. 1

Fig. 2

*Fig. 4*

*Fig. 3*

2